# EUROPEAN PATENT APPLICATION

(11) **EP 4 364 579 A1**
(43) Date of publication of application: **08.05.2024**
(21) Application number: 22833196.3
(22) Date of filing: 29.06.2022
(51) Int. Cl.: A23L 2/52, A23L 2/00, C12G 3/04

(54) **BEVERAGE, AND METHOD FOR ENHANCING ALCOHOLIC FEEL OF BEVERAGE**

(30) Priority: 01.07.2021 JP 2021110024
(71) Applicant: Suntory Holdings Limited, Osaka 530-8203 (JP)
(72) Inventor: KANDA, Naoto, Soraku-gun, Kyoto 619-0284 (JP); ISHII, Hitoshi, Soraku-gun, Kyoto 619-0284 (JP); SASANUMA, Yumi, Soraku-gun, Kyoto 619-0284 (JP); KAJI, Satoru, Soraku-gun, Kyoto 619-0284 (JP)
(74) Representative: Vossius & Partner Patentanwälte Rechtsanwälte mbB
(86) International application number: PCT/JP2022/025900
(87) International publication number: WO 2023/277050

(57) **Abstract**

The present invention aims to provide a beverage with an enhanced alcoholic sensation and a method of enhancing an alcoholic sensation of a beverage. The present invention relates to, for example, a beverage containing one or more C8-C18 fatty acids at a total concentration of 100 ppb or more and one or more C12-C18 fatty acid ethyl esters at a total concentration of 100 ppb or more, wherein a concentration of a fatty acid with a highest content among the fatty acids is less than 500 ppb.

## Description

### TECHNICAL FIELD

The present invention relates to a beverage and a method of enhancing an alcoholic sensation of a beverage.

### BACKGROUND ART

In recent years, alcoholic beverages and non-alcoholic beverages called RTDs have become increasingly popular. The "RTD" is an abbreviation for "Ready to Drink". It includes alcoholic beverages and non-alcoholic beverages that are ready to drink immediately, such as canned *chuhai*, canned cocktails, and canned highball.

Presumedly, the alcoholic sensation of an alcoholic beverage can be enhanced by increasing the alcohol by volume. However, increasing the alcohol by volume fails to meet the needs of health-conscious consumers who want to reduce alcohol intake as much as possible.

The term "non-alcoholic beverage" refers to an alcohol-flavored beverage having an alcohol content of less than 1% and having an appearance, a taste, an aroma, and the like that are similar to those of alcohols. It is desired to enhance the alcohol-like sensation without increasing the alcohol by volume.

In this point, Patent Literature 1 discloses a technique to enhance the alcohol-taste of an alcoholic beverage or a non-alcoholic beverage using savory. However, this technique has a problem in that a characteristic aroma of savory is imparted to the beverage.

Patent Literature 2 discloses a technique to impart an alcohol-taste to an alcoholic beverage or a non-alcoholic beverage using gentiobiose, which is a disaccharide. However, gentiobiose has a distinctive bitter taste.

### CITATION LIST

### - Patent Literature

Patent Literature 1: JP 2016-26476 A
Patent Literature 2: JP 2017-12039 A

### SUMMARY OF INVENTION

### - Technical Problem

The present invention aims to provide a beverage with an enhanced alcoholic sensation. The present invention also aims to provide a method of enhancing an alcoholic sensation of a beverage.

### - Solution to Problem

Specifically, the present invention relates to the following beverage and the like.
(1) A beverage containing: one or more C8-C18 fatty acids at a total concentration of 100 ppb or more; and one or more C12-C18 fatty acid ethyl esters at a total concentration of 100 ppb or more, wherein a concentration of a fatty acid with a highest content among the fatty acids is less than 500 ppb.
(2) The beverage according to (1) above, wherein the beverage contains two or more C8-C18 fatty acids and two or more C12-C18 fatty acid ethyl esters.
(3) The beverage according to (1) or (2) above, wherein the fatty acids include at least one of dodecanoic acid or tetradecanoic acid, and a total concentration of dodecanoic acid and tetradecanoic acid is 100 ppb or more.
(4) The beverage according to (1) to (3) above, wherein a total concentration of one or more C8-C18 fatty acids is 500 ppb or more.
(5) The beverage according to any one of (1) to (4) above, wherein a total concentration of one or more C12-C18 fatty acid ethyl esters is 500 ppb or more.
(6) The beverage according to any one of (1) to (5), wherein the beverage is an alcoholic beverage having an ethanol concentration of 1 v/v% or more and less than 5 v/v%.
(7) The beverage according to any one of (1) to (5) above, wherein the beverage is an alcohol-flavored beverage having an ethanol concentration of less than 1 v/v%.
(8) A method of enhancing an alcoholic sensation of a beverage, the method including: a fatty acid concentration adjustment step in which a total concentration of one or more selected from the group consisting of C8-C18 fatty acids is adjusted to 100 ppb or more and a concentration of a component with a highest content among the fatty acids is adjusted to less than 500 ppb; and a fatty acid ethyl ester concentration adjustment step in which a total concentration of one or more selected from the group consisting of C12-C18 fatty acid ethyl esters is adjusted to 100 ppb or more.
(9) The method of enhancing an alcoholic sensation of a beverage according to (8) above, wherein the beverage is an alcoholic beverage having an ethanol concentration of 1 v/v% or more and less than 5 v/v%.
(10) The method of enhancing an alcoholic sensation of a beverage according to (8) above, wherein the beverage is an alcohol-flavored beverage having an ethanol concentration of less than 1 v/v%.

### - Advantageous Effects of Invention

The present invention can provide a beverage with an enhanced alcoholic sensation. The present invention can also provide a method of enhancing an alcoholic sensation of a beverage.

The "alcoholic sensation" imparted by the present invention refers to a stimulating sensation to the throat which persists for a certain period from swallowing an alcoholic beverage. The "alcoholic sensation" in the present invention does not include changes in body condition during drinking alcoholic beverages, such as a feeling of hot flashes in the body and a feeling of spiritual elation, which are perceived at the time of drinking alcoholic beverages. The "alcoholic sensation" means a stimulating sensation as described above.

### DESCRIPTION OF EMBODIMENTS

The present invention relates, for example, a beverage containing one or more C8-C18 fatty acids at a total concentration of 100 ppb or more and one or more C12-C18 fatty acid ethyl esters at a total concentration of 100 ppb or more, wherein a concentration of a fatty acid with a highest content among the fatty acids is less than 500 ppb.

As a result of extensive studies, the present inventors found that an excellent alcoholic sensation can be imparted to a beverage when the total concentration of one or more C8-C18 fatty acids and the total concentration of one or more C12-C18 fatty acid ethyl esters in the beverage are adjusted to specific ranges.

In the present invention, the beverage is not limited but is preferably an alcoholic beverage or an alcohol-flavored beverage because the present invention can impart an excellent alcoholic sensation to the beverage. Herein, a beverage having an ethanol concentration of 1 v/v% or more is referred to as "alcoholic beverage", and a beverage having an ethanol concentration of less than 1 v/v% is referred to as "alcohol-flavored beverage" (also referred to as "non-alcoholic beverage"). The present invention can enhance the alcoholic sensation even when the beverage has a low alcohol content. Thus, the beverage of the present invention is preferably an alcoholic beverage or an alcohol-flavored beverage having an ethanol concentration of less than 5 v/v%, more preferably an alcoholic beverage or an alcohol-flavored beverage having an ethanol concentration of 2.8 v/v% or less, particularly preferably an alcohol-flavored beverage having an ethanol concentration of less than 1 v/v%. The term "alcohol content" refers to the ethanol content % (v/v%) of the beverage, so that the ethanol concentration in the beverage is synonymous to the alcohol content of the beverage. In the present invention, the ethanol concentration in the beverage can be measured by any known method such as a vibrating density meter. Specifically, a beverage is filtered or sonicated to prepare a test material from which carbon dioxide has been removed as needed. The test material is steam distilled to obtain a distillate. The density of the distillate at 15°C is measured. The density is then converted to the alcohol content using an appendix "Table 2: Table of Conversion between Alcohol Content and Density (15°C) or Specific Gravity (15/15°C)" of the Official Analysis Method of National Tax Agency of Japan (National Tax Agency Directive No. 6 in 2007, revised on June 22, 2007).

In the present invention, the pH of the beverage is not limited but is preferably 2.0 to 5.0, more preferably 2.4 to 4.5, still more preferably 2.9 to 4.0. In a preferred embodiment, the beverage of the present invention may have a pH adjusted toward the acidic side with an acidulant or the like so as to be provided as a beverage suitable as a beverage with an enhanced alcoholic sensation. The pH is measured at 25°C.

The beverage of the present invention contains one or more C8-C18 fatty acids at a total concentration of 100 ppb or more, wherein a concentration of a fatty acid with a highest content among the fatty acids is less than 500 ppb. Examples of the C8-C18 fatty acids include saturated fatty acids such as octanoic acid (C8/caprylic acid), nonanoic acid (C9/pelargonic acid), decanoic acid (C10/capric acid), undecanoic acid (C11/undecylic acid), dodecanoic acid (C12/lauric acid), tridecanoic acid (C13/tridecylic acid), tetradecanoic acid (C14/myristic acid), pentadecanoic acid (C15/pentadecylic acid), hexadecanoic acid (C16/palmitic acid), heptadecanoic acid (C17/margaric acid), and octadecanoic acid (C18/stearic acid); and unsaturated fatty acids such as 9-hexadecenoic acid (C16:1/palmitoleic acid). The beverage of the present invention may contain one fatty acid or two or more fatty acids. In one embodiment, the beverage contains preferably two or more, more preferably three or more C8-C18 fatty acids.

Preferably, the beverage of the present invention contains a C8-C18 saturated fatty acid. Preferably, the beverage of the present invention contains at least one selected from the group consisting of octanoic acid, decanoic acid, dodecanoic acid, tetradecanoic acid, hexadecanoic acid, and octadecanoic acid. More preferably, the beverage of the present invention contains at least one fatty acid selected from the group consisting of octanoic acid, decanoic acid, dodecanoic acid, tetradecanoic acid, hexadecanoic acid, and octadecanoic acid at a total concentration of 100 ppb or more.

In order to more effectively enhance the alcoholic sensation, the beverage of the present invention preferably contains dodecanoic acid and/or tetradecanoic acid, and more preferably contains dodecanoic acid and/or tetradecanoic acid at a total concentration of 100 ppb or more. In this case, the beverage may contain a C8-C18 fatty acid in addition to dodecanoic acid and tetradecanoic acid. More preferably, the C8-C18 fatty acid in the beverage of the present invention is dodecanoic acid and/or tetradecanoic acid.

In the beverage of the present invention, when any fatty acid among the C8-C18 fatty acids has a concentration of 500 ppb or more by itself, a characteristic flavor of the fatty acid may be intensified. In other words, there is a risk of impairing the flavor of the beverage itself whose alcoholic sensation is intended to be enhanced and generating a negative flavor derived from the fatty acid. Thus, in the beverage of the present invention, the concentration of a component with a highest content (fatty acid) among the C8-C18 fatty acids is less than 500 ppb. In order to further suppress the generation of a negative flavor, the concentration of the component with a highest content among the fatty acids is preferably 480 ppb or less, more preferably 450 ppb or less, still more preferably 430 ppb or less, particularly preferably 400 ppb or less.

The beverage of the present invention contains one or more C12-C18 fatty acid ethyl esters at a total concentration of 100 ppb or more. Examples of C12-C18 fatty acids in the C12-C18 fatty acid ethyl esters include saturated fatty acids such as dodecanoic acid (C12/lauric acid), tetradecanoic acid (C14/myristic acid), pentadecanoic acid (C15/pentadecylic acid), hexadecanoic acid (C16/palmitic acid), heptadecanoic acid (C17/margaric acid), and octadecanoic acid (C18/stearic acid); and unsaturated fatty acids such as 9-hexadecenoic acid (C16:1/palmitoleic acid). The beverage of the present invention may contain one fatty acid ethyl ester or two or more fatty acid ethyl esters. In one embodiment, the beverage of the present invention contains preferably two or more, more preferably three or more C12-C18 fatty acid ethyl esters. Herein, the term "C12-C18 fatty acid ethyl ester" or "C12-C18 fatty acid ethyl esters" is sometimes simply described as "fatty acid ethyl ester" or "fatty acid ethyl esters".

Preferably, the beverage of the present invention contains at least one fatty acid ethyl ester selected from the group consisting of ethyl dodecanoate, ethyl tetradecanoate, ethyl hexadecanoate, and ethyl octadecanoate. More preferably, the beverage of the present invention contains at least one fatty acid ethyl ester selected from the group consisting of ethyl dodecanoate, ethyl tetradecanoate, ethyl hexadecanoate, and ethyl octadecanoate at a total concentration of 100 ppb or more.

The beverage of the present invention may contain either one fatty acid ethyl ester or two or more fatty acid ethyl esters. Yet, in order to suppress the generation of a negative flavor as opposed to the flavor of the beverage itself, the concentration of a component with a highest content (fatty acid ethyl ester) among the fatty acid ethyl esters is preferably 600 ppb or less, more preferably 500 ppb or less.

Preferably, the beverage of the present invention contains two or more C8-C18 fatty acids and two or more C12-C18 fatty acid ethyl esters.

Preferably, the beverage of the present invention contains two or more C8-C18 fatty acids at a total concentration of 500 ppb or more. When the beverage contains two or more fatty acids specified above at a total concentration of 500 ppb or more, it is possible to suppress the generation of a negative flavor as opposed to the flavor of the beverage itself and impart a better alcoholic sensation to the beverage. More preferably, the beverage of the present invention contains three or more C8-C18 fatty acids at a total concentration of 1000 ppb or more. The total concentration of C8-C18 fatty acids in the beverage of the present invention is preferably less than 5000 ppb, more preferably less than 3000 ppb.

Preferably, the beverage of the present invention contains one or more C12-C18 fatty acid ethyl esters at a total concentration of 500 ppb or more. When the beverage of the present invention contains the fatty acid ethyl esters at a total concentration of 500 ppb or more, the beverage may contain either one fatty acid ethyl ester or two or more fatty acid ethyl esters. Yet, in order to suppress the generation of a negative flavor as opposed to the flavor of the beverage itself, preferably, the beverage contains two or more fatty acid ethyl esters. When the beverage contains two or more fatty acid ethyl esters specified above at a total concentration of 500 ppb or more, it is possible to suppress the generation of a negative flavor as opposed to the flavor of the beverage itself and impart a better alcoholic sensation to the beverage. The beverage of the present invention may contain one or more C12-C18 fatty acid ethyl esters at a total concentration of 1000 ppb or more. More preferably, the beverage contains two or more of the fatty acid ethyl esters at a total concentration of 1000 ppb or more. The total concentration of C12-C18 fatty acid ethyl esters in the beverage of the present invention is, for example, preferably 5000 ppb or less, more preferably 3000 ppb or less.

The total concentration of C8-C18 fatty acids and the total concentration of C12-C18 fatty acid ethyl esters in the beverage may be measured by any method. For example, a gas chromatography mass spectrometer (GC-MS) or a liquid chromatography mass spectrometer (LC-MS) set to the conditions described in EXAMPLES (described later) can be used for measurement.

When the beverage of the present invention is an alcoholic beverage having an ethanol concentration of 1 v/v% or more, the type of the alcoholic beverage is not limited. Preferably, the beverage is beer, highball, *chuhai,* a cocktail, sour, or the like. When used in relation to the beverage of the present invention, the terms "highball" and "*chuhai*" mean beverages containing water, liquor, and carbon dioxide. The highball and *chuhai* may further contain fruit juice. When used in relation to the beverage of the present invention, the term "sour" means a beverage containing spirits, an acidic fruit juice of a citrus fruit or the like, a sweetening ingredient, and carbon dioxide. When used in relation to the beverage of the present invention, the term "cocktail" means an alcoholic beverage made by mixing an alcohol base with fruit juice or the like.

When the beverage of the present invention is an alcoholic beverage, any means may be used for the beverage to contain alcohol. Yet, typically, the beverage of the present invention contains liquor and thus contains alcohol. The liquor is not limited by its ingredients or production method. Examples of the liquor include spirits (e.g., vodka, rum, tequila, gin, and aquavit), neutral spirits, liqueurs, *shochu,* and whiskeys. Preferably, the liquor is a neutral spirit. The alcoholic beverage of the present invention may contain any of these liquors. Alternatively, the alcoholic beverage may contain alcohol different from these liquors and may not contain any of these liquors.

When the beverage of the present invention is an alcohol-flavored beverage having an ethanol concentration of less than 1 v/v% (non-alcoholic beverage), the type of the alcohol-flavored beverage is not limited. Yet, the alcohol-flavored beverage is preferably a beer-flavored beverage (non-alcoholic beer), a highball-flavored beverage (non-alcoholic highball), a *chuhai*-flavored beverage (non-alcoholic *chuhai*)*,* a cocktail-flavored beverage (non-alcoholic cocktail), a sour-flavored beverage (non-alcoholic sour), a plum liqueur-flavored beverage (non-alcoholic plum liqueur), a wine-flavored beverage (non-alcoholic wine), a *shochu*-flavored beverage (non-alcoholic *shochu*)*,* and a Japanese sake-flavored beverage (non-alcoholic Japanese sake). Of these, the beverage of the present invention is more preferably at least one selected from the group consisting of beer-flavored beverages (non-alcoholic beers), *chuhai*-flavored beverages (non-alcoholic *chuhai*)*,* cocktail-flavored beverages (non-alcoholic cocktails), and sour-flavored beverages (non-alcoholic sour).

### (Carbon dioxide gas)

The beverage of the present invention may contain carbon dioxide gas. Carbon dioxide gas can be added to the beverage by a method commonly known by a person skilled in the art. For example, although not limited thereto, carbon dioxide may be dissolved in the beverage under pressure; carbon dioxide may be mixed with the beverage in a pipe using a mixer such as a carbonator of Tuchenhagen GmbH; the beverage may be sprayed into a tank filled with carbon dioxide so as to allow the carbon dioxide to be adsorbed into the beverage; or the beverage may be mixed with carbonated water. The carbon dioxide gas pressure is adjusted suitably with any of these means.

When the beverage of the present invention contains carbon dioxide gas, the carbon dioxide gas pressure is not limited but is preferably 0.7 to 3.5 kgf/cm², more preferably 0.8 to 2.8 kgf/cm². In the present invention, the carbon dioxide gas pressure can be measured by a gas volume meter GVA-500A available from Kyoto Electronics Manufacturing Co., Ltd. For example, the carbon dioxide gas pressure is measured after setting the temperature of a test material at 20°C, releasing the gas inside a container (snifting) in the gas volume meter, and shaking the container. Herein, the term "carbon dioxide gas pressure" means the carbon dioxide gas pressure at 20°C unless otherwise specified.

### (Fruit juice or vegetable juice)

The beverage of the present invention may contain fruit juice and/or vegetable juice. The fruit juice may be either a straight fruit juice (fruit juice used directly in the form obtained by squeezing the fruit) or a concentrated fruit juice obtained by concentrating fruit juice. A clear fruit juice or a cloudy fruit juice can also be used. In addition, any of the following juices can also be used: a whole fruit juice obtained by removing only particularly coarse solids such as seeds by crushing the whole fruit including fruit rinds; fruit puree obtained by pureeing the fruit; and fruit juice obtained by crushing dried fruit pulps or extracting from dried fruit pulps. Vegetable juice can also be used in the same form as described above for the fruit juice.

The type of fruit juice is not limited. Examples include fruit juices of citrus fruits (e.g., oranges, *Citrus unshiu,* grapefruits, lemons, limes, iyokan, *Citrus natsudaidai, Citrus hassaku,* ponkan, shikuwasa, and kabosu), pome fruits (e.g., apples and pears), stone fruits (e.g., peaches, *Prunus mume,* apricots, plums, and cherries), berries (e.g., grapes, blackcurrants, and blueberries), tropical and subtropical fruits (pineapples, guavas, bananas, mangoes, and lychees), and fruity vegetables (e.g., strawberries, melons, and watermelons), One of these fruit juices may be used alone, or two or more thereof may be used in combination. The type of vegetable juice may be, for example, a tomato juice, a corn juice, a squash juice, or a carrot juice. One of these vegetable juices may be used alone or two or more thereof may be used in combination. Any of these fruit juices and vegetable juices may be used in combination.

When the beverage of the present invention contains fruit juice, the fruit juice is preferably of a citrus fruit type and/or a berry type. Preferably, the beverage contains at least one selected from the group consisting of oranges, grapefruits, lemons, limes, grapes, and blackcurrants.

The fruit juice content of the beverage of the present invention is not limited but is typically 0 to 100 w/w% or less than 10 w/w% when converted into a fruit juice percentage.

In the present invention, the "fruit juice percentage" in the beverage is calculated from the following conversion formula using the amount (g) of fruit juice added to the beverage (100 g). The concentration factor is calculated in accordance with the Japanese Agricultural Standards (JAS). Sugar refractometer readings of carbohydrate, honey, and the like added to the fruit juice are excluded.
Fruit juice percentage (w/w%) = <amount (g) of fruit juice added> × <concentration factor>/100 mL/<specific gravity of beverage> × 100

The vegetable juice content of the beverage of the present invention is not limited but is typically 0 to 100 w/w% or less than 10 w/w%. Here, the vegetable juice content is determined in the same manner as described for the fruit juice content converted to the fruit juice percentage.

When the beverage of the present invention is a beer-flavored beverage (non-alcoholic beer), the beer-flavored beverage may be produced by any method. For example, a typical beer can be produced through a preparation step and a fermentation step. In the preparation step, a raw material barley, water, and optional various additives are mixed to saccharify the raw material barley; the resulting saccharified liquid is filtered to obtain wort; and procedures such as adding hops to the wort, boiling, and cooling are performed as needed to obtain a pre-fermentation liquid. In the fermentation step, beer yeast is added to the pre-fermentation liquid to ferment the pre-fermentation liquid. A non-alcoholic beer-flavored beverage can be produced, for example, by excluding the fermentation step from the production process described above or by reducing the fermentation period in the fermentation step to suppress the generation of alcohol. A non-alcoholic beer-flavored beverage can also be produced by removing or reducing alcohol by distilling or diluting a post-fermentation liquid obtained in the fermentation step. Further, the method of producing a non-alcoholic beer-flavored beverage may include steps such as filtering, heating (sterilizing), and carbonating the pre-fermentation liquid (wort) obtained in the preparation step or the post-fermentation liquid substantially free of alcohol.

### (Other components)

Additives commonly added to beverages can also be added to the beverage of the present invention as long as the effect of the present invention is not impaired. Examples of such additives include flavoring or masking agents, vitamins, pigments, antioxidants, preservatives, seasonings, extracts, pH adjusters, and quality stabilizers.

The beverage of the present invention may or may not contain a malt extract. In a preferred embodiment, the beverage of the present invention does not contain a malt extract.

### (Beverage in sealed container)

The beverage of the present invention can be provided in a sealed container. Non-limiting examples of container forms include metal containers such as cans, plastic PET bottles, paper packages, bottles, and pouches. A sterilized product in a sealed container can be produced, for example, by a method in which the beverage of the present invention is packaged in a container and then subjected to heat sterilization such as retort sterilization or a method in which the beverage is sterilized and packaged in a container.

### (Method)

The present invention also relates to a method of enhancing an alcoholic sensation of a beverage. The method includes a fatty acid concentration adjustment step in which a total concentration of one or more selected from the group consisting of C8-C18 fatty acids is adjusted to 100 ppb or more and a concentration of a component with a highest content among the fatty acids is adjusted to less than 500 ppb; and a fatty acid ethyl ester concentration adjustment step in which a total concentration of one or more selected from the group consisting of C12-C18 fatty acid ethyl esters is adjusted to 100 ppb or more.

The total concentration of the fatty acids specified above in the beverage, the concentration of a fatty acid with a highest content, and the total concentration of the fatty acid ethyl esters specified above may be adjusted by any method, such as adding the fatty acids specified above and the fatty acid ethyl esters specified above. These components may be added at any time. The fatty acid concentration adjustment step and the fatty acid ethyl ester concentration adjustment step may be performed simultaneously or separately at any order of steps, as long as the total concentration of the fatty acids specified above, the concentration of a fatty acid component with a highest content, and the total concentration of the fatty acid ethyl esters specified above in the beverage obtained as a final product meet the above conditions. Preferred embodiments of the beverage in the method of the present invention are the same as the preferred embodiments of the beverage of the present invention. Further, specific examples and amounts of other additional components to be added to the beverage are also as described above.

Preferably, the method of the present invention is a method of enhancing an alcoholic sensation of an alcoholic beverage having an ethanol concentration of 1 v/v% or more and less than 5 v/v%.

Preferably, the method of the present invention is a method of enhancing an alcoholic sensation of an alcohol-flavored beverage having an ethanol concentration of less than 1 v/v%.

### EXAMPLES

The present invention is specifically described below with reference to examples, but the present invention is not limited to the examples below.

### <Example 1: Sensory evaluation in the case of adding fatty acid and/or fatty acid ethyl ester to commercial beverage>

To a commercial lemon sour-flavored beverage (control) were added caprylic acid, capric acid, lauric acid, myristic acid, palmitic acid, and stearic acid each to the same concentration such that the total concentration of these C8-C18 fatty acids would be 100 ppb or 1000 ppb, whereby samples of Test Material 1-1 and Test Material 1-4 were prepared. To another commercial lemon sour-flavored beverage were added ethyl laurate, ethyl myristate, ethyl palmitate, and ethyl stearate each to the same concentration such that the total concentration of these C12-C18 fatty acid ethyl esters would be 100 ppb or 1000 ppb, whereby samples of Test Material 1-2 and Test Material 1-5 were prepared. To another commercial lemon sour-flavored beverage were added caprylic acid, capric acid, lauric acid, myristic acid, palmitic acid, and stearic acid each to the same concentration such that the total concentration of these C8-C18 fatty acids would be 100 ppb as well as ethyl laurate, ethyl myristate, ethyl palmitate, and ethyl stearate each to the same concentration such that the total concentration of these C12-C18 fatty acid ethyl esters would be 100 ppb, whereby a sample of Test Material 1-3 was prepared. To another commercial lemon sour-flavored beverage were added caprylic acid, capric acid, lauric acid, myristic acid, palmitic acid, and stearic acid each to the same concentration such that the total concentration of these C8-C18 fatty acids would be 1000 ppb as well as ethyl laurate, ethyl myristate, ethyl palmitate, and ethyl stearate each to the same concentration such that the total concentration of these C12-C18 fatty acid ethyl esters would be 1000 ppb, whereby a sample of Test Material 1-6 was prepared. The resulting samples were each subjected to sensory evaluation for alcoholic sensation.

The lemon sour-flavored beverage (control) is a non-alcoholic sour-flavored beverage containing 1% fruit juice in its ingredients. The ingredients include a lemon juice, dietary fiber, carbonic acid, an acidulant, a flavoring or masking agent, an antioxidant, a sweetener, and the like. The nutrients per 100 ml include 0% alcohol content, 0% protein, and 0.5 to 1.0 g carbohydrate. The total concentration of C8-C18 fatty acids and the total concentration of C12-C18 fatty acid ethyl esters in the commercial lemon sour-flavored beverage (control) were measured by GC-MS and LC-MS under the following conditions.

### (Conditions for fatty acid LC-MS analysis)

### (1) Preparation of standard solution

Fatty acid standard reagents were separately dissolved in solvents (methanol, acetone, and chloroform) to prepare standard stock solutions. The standard stock solutions were mixed together and appropriately diluted with methanol to prepare a fatty acid standard solution mixture. Here, internal standard substances (each fatty acid-¹⁸O₂) were added to the standard solution mixture.

### (2) Preparation of test material for analysis

Hydrochloric acid was added to a commercial beverage as a test material. Fatty acids were extracted with hexane, and a hexane layer was collected. Subsequently, the solvents were replaced, and the internal standard substances (each fatty acid-¹⁸O₂) were added each to the same concentration as that of the standard solution, followed by analysis using a liquid chromatography mass spectrometer (LC-MS). The blank was also similarly pretreated and analyzed.

### (3) Analytical equipment

LC: Prominence XR (available from Shimadzu Corporation)
MS: LTQ Orbitrap XL (available from Thermo Fisher Scientific)
Column: L-column 3 ODS (2.1 mm I.D.× 150 mm; particle size 2 µm, CERI)

### (4) Peak detection and analysis

Analysis software MRMPROBS ver. 2.60 was used for peak detection. The value of the peak area of detected fatty acids was divided by the value of peak area of the internal standards (each fatty acid-¹⁸O₂) to calculate the peak area ratio, and a calibration curve was prepared from the peak area ratio of the standard solution and the concentration thereof. The fatty acid concentration in the test material was calculated using the calibration curve, the peak area ratio of the test material, the amount of the test material, and the like. The lower limit of quantification was similarly calculated using the lowest concentration at which the signal/noise (S/N) ratio is more than 10 during analysis of the standard solution.

### (Conditions for fatty acid ethyl ester GC-MS analysis)

### (1) Preparation of standard solution

Fatty acid ethyl ester standard reagents (C4-C24 Even Carbon Saturated FAMEs (available from MERCK)) were separately dissolved in water to prepare standard stock solutions. The standard stock solutions were mixed and appropriately diluted with water to prepare a standard solution mixture containing each fatty acid ethyl ester at a concentration of 1 ng/mL to 1000 ng/mL. Sodium chloride was added to and dissolved in the standard solution mixture to a concentration of 30 w/w%.

### (2) Preparation of test materials for analysis

A beverage as a test material was degassed by sonication. After bubbles subsided, sodium chloride was added to and dissolved in the beverage to a concentration of 30 w/w%. The mixture was analyzed by solid-phase microextraction (SPME) using a gas chromatography mass spectrometer (GC-MS).

### (3) Analytical equipment

GC: Agilent 7890A (available from Agilent Technologies)
MS: Agilent 5975C (available from Agilent Technologies)
Column: DB-WAX UI 30 m × 0.250 mm (available from Agilent Technologies)

### (4) Analysis conditions

Measurement conditions are as follows.
<GC>
   Mode: splitless
   Flow rate: 1 ml/min
   Temperature-rising conditions: 40°C → 250°C (+4°C/min)
<MS>
   Measurement range: m/z 34-350
   Ion source temperature: 230°C

### (5) Peak detection and analysis

Analysis software MassHunter Workstation Software Quantitative Analysis ver. B.09.00 was used for peak detection. A calibration curve was prepared from the value of the peak area of detected fatty acid ethyl esters and the concentrations thereof. The fatty acid ethyl ester concentration in the test material was calculated using the calibration curve and the peak area ratio of the test material.

The procedure and reference points of the sensory evaluation are as follows.

Three trained panelists performed the sensory evaluation by swallowing the commercial product (control) and the samples obtained by adding specific fatty acids and/or specific fatty acid ethyl esters to the commercial product.

### [Procedure]

(1) Fatty acids (caprylic acid, capric acid, lauric acid, myristic acid, palmitic acid, and stearic acid) were weighed out and dissolved in a 50% aqueous propylene glycol solution (food additive) to predetermined concentrations. Fatty acid ethyl esters (ethyl laurate, ethyl myristate, ethyl palmitate, and ethyl stearate) were weighed out and dissolved in a 50% aqueous propylene glycol solution (food additive) to predetermined concentrations.
(2) A predetermined amount of the resulting fatty acid compound and a predetermined amount of the resulting fatty acid ethyl ester compound were added to a commercial beverage.
(3) The volume of samples was filled up to the final volume with commercial beverages.
(4) The resulting sample solution was dispensed and swallowed for sensory evaluation.

### [Criteria for sensory evaluation]

For the sensory evaluation, the three trained panelists gave scores based on the following criteria with 0.5 increments, and the scores were averaged. The "alcoholic sensation" in the present invention refers to a stimulating sensation to the throat which persists for a certain period from swallowing a beverage. For the sensory evaluation, two items "stimulation intensity" and "stimulation persistence" were set as the evaluation axes. Scores were given to the "stimulation intensity" and the "stimulation persistence" that were enhanced by adding the fatty acids and/or fatty acid ethyl esters. The scores were given to each of these evaluation axes based on the following criteria, with an evaluation score of zero for each of the "stimulation intensity" and the "stimulation persistence" of the commercial beverage used as control. As reference points, an alcohol having an alcohol content of 5 v/v% (i.e., lemon sour) was scored with three points. 0 points: No effect is perceived at all (commercial lemon sour-flavored beverage (control))
1 point: The effect is slightly perceived.
2 points: The effect is clearly perceived.
3 points: The effect is highly perceived (alcohol having an alcohol content of 5 v/v% (lemon sour))

Table 1 shows average scores of the three trained panelists (panelists' average) as the results of the sensory evaluation.

**[Table 1]**

| Test Material | | Control | Test Material 1-1 | Test Material 1-2 | Test Material 1-3 | Test Material 1-4 | Test Material 1-5 | Test Material 1-6 |
|---|---|---|---|---|---|---|---|---|
| C8-18 fatty acid concentration (ppb) | | 30 | 100 | 30 | 100 | 1000 | 30 | 1000 |
| C12-18 fatty acid ethyl ester concentration (ppb) | | 17 | 17 | 100 | 100 | 17 | 1000 | 1000 |
| Stimulation intensity | Panelists' average | 0.0 | 1.3 | 1.2 | 2.3 | 1.3 | 1.8 | 2.7 |
| Stimulation persistence | Panelists' average | 0.0 | 1.2 | 1.3 | 2.0 | 1.8 | 1.5 | 2.8 |

According to the results shown in Table 1, the panelists' average stimulation intensity and the panelists' average stimulation persistence are greater than 1 in each of Test Material 1-1 in which only the total concentration of C8-C18 fatty acids is greater than 100 ppb in the commercial lemon sour-flavored beverage (control) and Test Material 1-2 in which only the total concentration of C12-C18 fatty acid ethyl esters is greater than 100 ppb in the commercial lemon sour-flavored beverage (control). This confirms that an alcoholic sensation is imparted to some degree. In Test Material 1-3 in which the total concentration of C8-C18 fatty acids and the total concentration of C12-C18 fatty acid ethyl esters are both greater than 100 ppb, the panelists' average stimulation intensity and the panelists' average stimulation persistence are both greater than 2. This confirms that an alcoholic sensation is effectively imparted.

In each of Test Material 1-4 in which only the total concentration of C8-C18 fatty acids is greater than 1000 ppb and Test Material 1-5 in which only the total concentration of C12-C18 fatty acid ethyl esters is greater than 1000 ppb, the panelists' average stimulation intensity and the panelists' average stimulation persistence are both greater than 1 and less than 2. This confirms that an alcoholic sensation is imparted. In Test Material 1-6 in which the total concentration of C8-C18 fatty acids and the total concentration of C12-C18 fatty acid ethyl esters are both greater than 1000 ppb, the panelists' average stimulation intensity and the panelists' average stimulation persistence are both greater than 2.5. This confirms that an alcoholic sensation is more effectively imparted.

### <Example 2: Evaluation of effective concentrations of fatty acids and fatty acid ethyl esters>

To the commercial lemon sour-flavored beverage (control) used in Example 1 were added caprylic acid, capric acid, lauric acid, myristic acid, palmitic acid, and stearic acid each to the same concentration such that the total concentration of these C8-C18 fatty acids would be 50, 100, 500, or 1000 ppb. Ethyl laurate, ethyl myristate, ethyl palmitate, and ethyl stearate were also added each to the same concentration such that the total concentration of these C12-C18 fatty acid ethyl esters would be 50, 100, 500, or 1000 ppb, whereby samples of Test Materials 2-1 to 2-4 were prepared. The trained panelists swallowed each of the resulting samples for sensory evaluation in the same manner as in Example 1. Table 2 shows the results obtained from the sensory evaluation.

**[Table 2]**

| Test Material | | Control | Test Material 2-1 | Test Material 2-2 | Test Material 2-3 | Test Material 2-4 |
|---|---|---|---|---|---|---|
| C8-18 fatty acid concentration (ppb) | | 30 | 50 | 100 | 500 | 1000 |
| C12-18 fatty acid ethyl ester concentration (ppb) | | 17 | 50 | 100 | 500 | 1000 |
| Stimulation intensity | Panelists' average | 0.0 | 1.7 | 2.3 | 2.8 | 2.7 |
| Stimulation persistence | Panelists' average | 0.0 | 1.3 | 2.0 | 2.7 | 2.8 |

According to the results shown in Table 2, when the C8-C18 fatty acids were added to a total concentration of 100 ppb or more and the C12-C18 fatty acid ethyl esters were added to a total concentration of 100 ppb or more and to a total concentration of 100 ppb or more to the commercial lemon sour-flavored beverages, the panelists' average stimulation intensity and the panelists' average stimulation persistence of each beverage are both greater than 2. This confirms that an alcoholic sensation is effectively imparted.

According to the results of Test Material 2-3 and Test Material 2-4 shown in Table 2, when the C8-C18 fatty acids were added to a total concentration of 500 ppb or more and the C12-C18 fatty acid ethyl esters were added to a total concentration of 500 ppb or more to the commercial lemon sour-flavored beverages, the panelists' average stimulation intensity and the panelists' average stimulation persistence of each beverage are both greater than 2.5. This confirms that an alcoholic sensation is more effectively imparted.

### <Example 3: Evaluation of each fatty acid>

The fatty acids (C8-C18 fatty acids) described in Table 3 below were separately added each to a total concentration of 100 ppb to the commercial lemon sour-flavored beverages (control) used in Example 1, whereby samples of Test Materials 3-1 to 3-6 were prepared. The trained panelists swallowed each of the resulting samples for sensory evaluation in the same manner as in Example 1. Table 3 shows the results obtained from the sensory evaluation. In the control, the total concentration of C8-C18 fatty acids was 30 ppb, and the total concentration of C12-C18 fatty acid ethyl esters was 17 ppb.

**[Table 3]**

| Test Material | | Control | Test Material 3-1 | Test Material 3-2 | Test Material 3-3 | Test Material 3-4 | Test Material 3-5 | Test Material 3-6 |
|---|---|---|---|---|---|---|---|---|
| Added fatty acid (total concentration of 100 ppb) | | - | Caprylic acid | Capric acid | Lauric acid | Myristic acid | Palmitic acid | Stearic acid |
| Stimulation intensity | Panelists' average | 0.0 | 1.8 | 2.0 | 2.3 | 2.5 | 1.8 | 1.7 |
| Stimulation persistence | Panelists' average | 0.0 | 1.5 | 2.0 | 3.0 | 2.8 | 2.2 | 2.2 |

According to the results shown in Table 3, when the C8-C18 fatty acids were each separately added to a total concentration of 100 ppb to the commercial lemon sour-flavored beverages (control), in each case with any fatty acid, the panelists' average stimulation intensity and the panelists' average stimulation persistence of each beverage are both greater than 1.5. This shows that an alcoholic sensation is imparted, enhancing the alcoholic sensation of the commercial lemon sour-flavored beverages (control). In particular, regarding the beverage with lauric acid (dodecanoic acid/C12) and the beverage with myristic acid (tetradecanoic acid /C14), the panelists' average stimulation intensity is greater than 2 and the panelists' average stimulation persistence is greater than 2.5. This confirms that a better alcoholic sensation is imparted to these beverages, significantly enhancing the alcoholic sensation of the commercial lemon sour-flavored beverages (control).

### <Example 4: Evaluation of characteristic flavor of individual fatty acid>

The fatty acids (C8-C18 fatty acids) described in Table 4 below were separately added each to a total concentration of 100, 400, 500, or 600 ppb to the commercial lemon sour-flavored beverages (control) used in Example 1, whereby samples were prepared. The resulting samples were checked for whether a characteristic flavor of individual fatty acid was imparted to the corresponding beverage to generate a negative flavor as opposed to the flavor of the commercial beverage. The presence or absence of a negative flavor as opposed to the flavor of the commercial beverage was checked by the three trained panelists. When no negative flavor was perceived as opposed to the flavor of the commercial beverage (control), the beverage was evaluated as "o". When a negative flavor was perceived as opposed to the flavor of the commercial beverage (control), the beverage was evaluated as "×". Table 4 below shows "×" when the beverage was evaluated as "×" by at least one of the three trained panelists, and "o" when the beverage was evaluated as "o" by all the three trained panelists. Table 4 below shows comments regarding the negative flavor as opposed to the commercial beverage. In the control, the total concentration of C8-C18 fatty acid was 30 ppb and the total concentration of C12-C18 fatty acid ethyl esters was 17 ppb.

**[Table 4]**

| Added fatty acid | | Caprylic acid (C8) | Capric acid (C10) | Lauric acid (C12) | Myristic acid (C14) | Palmitic acid (C16) | Stearic acid (C18) |
|---|---|---|---|---|---|---|---|
| Amount in sample | Total concentration of 100 ppb | ○ | ○ | ○ | ○ | ○ | ○ |
| | Total concentration of 400 ppb | ○ | ○ | ○ | ○ | ○ | ○ |
| | Total concentration of 500 ppb | ○ | × | × | × | × | × |
| | Total concentration of 600 ppb | × | - | - | - | - | - |
| Comments on negative flavor | | Sticky aftertaste | Milky aroma | Bad aftertaste | Milky aroma | Milky aroma | Bad aftertaste and bad retronasal aroma |

According to the results shown in Table 4, when the C10-C18 fatty acids (capric acid, lauric acid, myristic acid, palmitic acid, and stearic acid) were separately added each to a total concentration of 500 ppb to the commercial lemon sour-flavored beverages (control), a characteristic flavor of each fatty acid was perceived. Regarding the C8 fatty acid (caprylic acid), a characteristic flavor of caprylic acid was perceived when caprylic acid was added to a total concentration of 600 ppb. The above confirmed that it is effective when the concentration of a component with a highest content among the C8-C18 fatty acids is less than 500 ppb in order to prevent a flavor, other than the alcoholic sensation, that affects the flavor of the beverage from being imparted to the beverage.

### <Example 5: Evaluation of characteristic flavor of individual fatty acid>

To each of various commercial beverages described below were added caprylic acid, capric acid, lauric acid, myristic acid, palmitic acid, and stearic acid each to the same concentration such that the total concentration of these C8-C18 fatty acids would be 1000 ppb as well as ethyl laurate, ethyl myristate, ethyl palmitate, and ethyl stearate each to the same concentration such that the total concentration of these C12-C18 fatty acid ethyl esters would be 1000 ppb, whereby samples were prepared. The resulting samples were checked for whether the alcoholic sensation was enhanced. In order to check whether the alcoholic sensation was enhanced in the various commercial beverages, the three trained panelists swallowed the samples for evaluation. The samples to which the above components were added were compared to the respective commercial beverages (base beverages) in terms of the effect on alcoholic sensation, i.e., a stimulating sensation to the throat which persists for a certain period from swallowing the sample. The effect was evaluated with comments. Table 5 below shows the results obtained.

### (Commercial beverages)

- Commercial lemon sour-flavored beverage (total concentration of C8-C18 fatty acids: 30 ppb; total concentration of C12-C18 fatty acid ethyl esters: 17 ppb)
- Commercial cassis orange cocktail-flavored beverage (total concentration of C8-C18 fatty acids: 180 ppb; total concentration of C12-C18 fatty acid ethyl esters: less than 1 ppb)
- Commercial grape sour beverage (alcohol content: 3 v/v%; total concentration of C8-C18 fatty acids: 155 ppb; total concentration of C12-C18 fatty acid ethyl esters: less than 1 ppb)
- Commercial alcoholic beverage (alcohol content: 9 v/v%, total concentration of C8-C18 fatty acids: 140 ppb; total concentration of C12-C18 fatty acid ethyl esters: 1 ppb)
- Commercial beer-flavored beverage (total concentration of C8-C18 fatty acids: less than 1 ppb; total concentration of C12-C18 fatty acid ethyl esters: less than 1 ppb)

**[Table 5]**

| | | Non-alcoholic RTD 1 Lemon flavor | Non-alcoholic RTD 2 Cassis orange flavor | Alcoholic RTD 1 Alc. 3% grape flavor | Alcoholic RTD 2 Alc. 9% sugar free | Non-alcoholic beer flavor |
|---|---|---|---|---|---|---|
| Effect on alcoholic sensation | Panelist A | Effect exerted | Effect exerted | Effect exerted | Effect exerted | Effect exerted |
| | Panelist B | Effect exerted | Effect exerted | Effect exerted | Effect exerted | Effect exerted |
| | Panelist C | Effect exerted | Effect exerted | Effect exerted | Effect exerted | Effect exerted |
| Comments | Panelist A | Thick stimulation is perceived during drinking. | Stimulation remains softly, increasing alcohol-like characteristics. | Stimulation lingers strongly, increasing alcohol-like characteristics. | Stimulation lasts long. | Stimulation lasts long and remains. |
| | Panelist B | Alcohol-like stimulation persists, with a high satisfaction level of alcoholic sensation. | Stimulation is perceived stronger later on. | Stimulation sensation is imparted slightly. | Stimulation sensation is increased slightly. | Stimulation sensation is increased slightly. |
| | Panelist C | Stimulation intensity is high, with a sensation of lasting stimulation. Alcohol-like characteristics are perceived. | Stimulation is imparted after swallowing. | Alcohol-like stimulation lingers. | Stimulation persistence is added. | Stimulation in the latter half persists slightly. |

The results shown in Table 5 confirm that an alcoholic sensation can be imparted to the various-flavored beverages when the C8-C18 fatty acids were added to a total concentration of 1000 ppb or more and the C12-C18 fatty acid ethyl ester were added to a total concentration of 1000 ppb or more to these beverages.

### INDUSTRIAL APPLICABILITY

The present invention can provide a beverage with an enhanced alcoholic sensation.

## Claims

1. A beverage comprising:
one or more C8-C18 fatty acids at a total concentration of 100 ppb or more; and
one or more C12-C18 fatty acid ethyl esters at a total concentration of 100 ppb or more,
wherein a concentration of a fatty acid with a highest content among the fatty acids is less than 500 ppb.

2. The beverage according to claim 1,
wherein the beverage contains two or more C8-C18 fatty acids and two or more C12-C18 fatty acid ethyl esters.

3. The beverage according to claim 1 or 2,
wherein the fatty acids include at least one of dodecanoic acid or tetradecanoic acid, and a total concentration of dodecanoic acid and tetradecanoic acid is 100 ppb or more.

4. The beverage according to any one of claims 1 to 3,
wherein a total concentration of one or more C8-C18 fatty acids is 500 ppb or more.

5. The beverage according to any one of claims 1 to 4,
wherein a total concentration of one or more C12-C18 fatty acid ethyl esters is 500 ppb or more.

6. The beverage according to any one of claims 1 to 5,
wherein the beverage is an alcoholic beverage having an ethanol concentration of 1 v/v% or more and less than 5 v/v%.

7. The beverage according to any one of claims 1 to 5,
wherein the beverage is an alcohol-flavored beverage having an ethanol concentration of less than 1 v/v%.

8. A method of enhancing an alcoholic sensation of a beverage, the method comprising:
a fatty acid concentration adjustment step in which a total concentration of one or more selected from the group consisting of C8-C18 fatty acids is adjusted to 100 ppb or more and a concentration of a component with a highest content among the fatty acids is adjusted to less than 500 ppb; and
a fatty acid ethyl ester concentration adjustment step in which a total concentration of one or more selected from the group consisting of C12-C18 fatty acid ethyl esters is adjusted to 100 ppb or more.

9. The method of enhancing an alcoholic sensation of a beverage according to claim 8,
wherein the beverage is an alcoholic beverage having an ethanol concentration of 1 v/v% or more and less than 5 v/v%.

10. The method of enhancing an alcoholic sensation of a beverage according to claim 8,
wherein the beverage is an alcohol-flavored beverage having an ethanol concentration of less than 1 v/v%.
